# EUROPEAN PATENT APPLICATION

(11) **EP 2 339 433 A1**
(43) Date of publication of application: **29.06.2011**
(21) Application number: 09016056.5
(22) Date of filing: 28.12.2009
(51) Int. Cl.: G06F 3/041, G06F 3/044

(54) **Liquid crystal display system integrated with touch detector**

(71) Applicant: Holylite Microelectronics Corporation, Hsinchu, 300 (TW)
(72) Inventor: Lin, Shyuh Der, Jhubei City Hsinchu County 302 (TW)
(74) Representative: Schlimme, Wolfram

(57) **Abstract**

The present invention offers a liquid crystal display system integrated with touch detection circuit. The electrodes used in the display function can be also used as the touch sensors of the touch detection function. Time multiplexing technology is used in the present invention. No additional fabrication process is required in the present invention as compare with that of liquid crystal display panel without touch detection function. No additional fabrication process means there is no additional absorption and reflection of light.

## Description

### BACKGROUND OF THE INVENTION

### Field of the invention

The present invention relates to a capacitive touch sensor used in a liquid crystal display (LCD) panel. In particular, the invention uses the display electrodes of a liquid crystal display panel as the sensor electrodes of a capacitive touch detector. No additional electrodes are required in the invention.

### Description of the Related Art

Touch panels have been widely used as input devices in many electronic products. Especially, touch panel combined with liquid crystal display panel become popular in many kind of application. Generally, a liquid crystal display panel with touch detection function is obtained by attaching a touch panel with a liquid crystal display panel. The prior arts used this technology are: U.S. Pat 6,538,706 B2, to Ming-shen Sun, U.S. Pat. 7,557,869 B2 to Yong Ik Bang et al., U.S. Pat. 6,765,629 B1, U.S. Pat. 7,508,461 B2 to Yun Cheol Jeong et al. Attaching a touch panel to a liquid crystal display panel means adding the touch panel as an additional component to the liquid crystal display panel. Besides the additional cost, this technology creates disadvantages in adding the thickness and weight of the whole set of the panel and causing more absorption and reflection of light.

The prior arts described above are resistive type touch panel. There are two layers of electrode in a resistive type touch panel. Multiple layers of electrode in a touch panel cause additional absorption and reflection of light and the performance of the liquid crystal display panel will be degraded. A technology used in China patent NO. ZL 200620013292.3 can resolve part of the disadvantages as mentioned above. In this technology, a transparent conducting film is coated directly on the upper glass substrate of a liquid crystal display panel as touch sensor electrode. This prior art is a capacitive touch sensor, and only one layer of conducting film is necessary instead of two layers of conducting film in the resistive touch sensor technology.

Although, this technology of the prior art can reduce the thickness and the weight of the liquid crystal display panel with touch detector, the transparent electrode can still causes reflection and absorption of light and fabrication cost is higher than that of a conventional LCD panel without touch sensor. It is better to insert the touch sensor electrodes inside the glass substrates of a liquid crystal display panel to avoid additional reflection and absorption of light.

A liquid crystal display panel integrated with resistive touch sensors was proposed in U.S. Pat. 6,501,529 B1, to Mikio Kurihara et al. In this construction there are two substrates, the first substrate and the second substrate. A liquid crystal layer is inserted between the two substrates. On the surface of each substrate, a display electrode for displaying an image and a touch sensor electrode for detecting a touch position are provided. This construction reduces the thickness and weight of the whole panel. Besides, the reflection and absorption of the light are also reduced. But the location of the touch sensor electrode is limited, because the touch sensor electrode can not overlay with the display electrode. Another disadvantage is the construction of the display electrode is different from the construction of the touch sensor electrode, and the cost of the fabrication process will be higher.

It is important in many applications to obtain a low cost, light weight and good quality liquid crystal display panel integrated with touch detector. In order to achieve the functions as described above, it is better to share display electrode as touch sensor electrode.

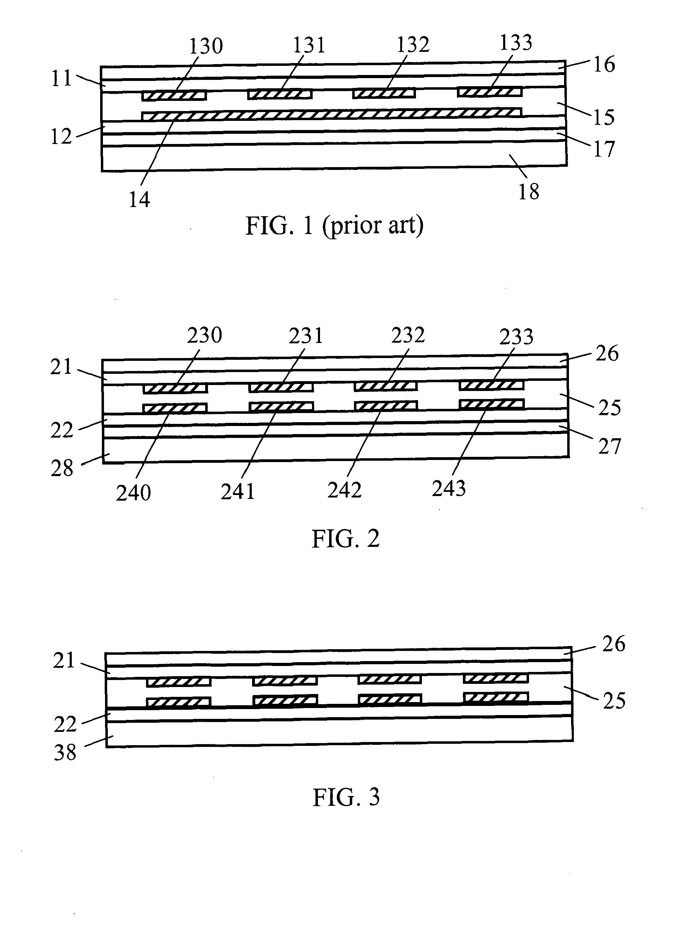

FIG. 1 is a cross-sectional view of a conventional liquid crystal display apparatus without touch detection function. In FIG. 1 the apparatus contains two glass substrates: an upper substrate 11 and a lower substrate 12. Upper display electrodes 130, 131, 132 and 133 are coated on the upper substrate 11 and a lower display electrode 14 is coated on the lower substrate 12. Each upper display electrode forms a pixel or a segment with the lower display electrode 14. A liquid crystal layer 15 is interposed between the upper substrate 11 and the lower substrate 12. The liquid crystal display panel includes a lower polarizer 17, an upper polarizer 16 and back light 18.

In FIG. 1 the distance between the upper substrate 11 and the lower substrate 12 is very small and the capacitance between the upper display electrode and the lower display electrode is very high. If the upper display electrodes are directly used as the touch sensor electrodes, the sensitivity will be very low and difficult to make correct detection. During the performance of the display function, AC voltage waveforms must be applied to both display electrodes. The detection of touch sensor will be influenced by the AC voltage waveform if the same upper display electrodes are used as the touch sensors. To resolve this problem, time multiplexing between display function and touch detection is necessary.

### OBJECTS OF THE INVENTION

It is therefore an object of the invention to provide a liquid crystal display panel with touch detection function.

It is another object of the invention to provide a liquid crystal display panel with touch detection function by the same fabrication process of a liquid crystal display panel without touch detection function.

It is another object of the invention to provide a liquid crystal display panel with touch detection function, where the touch sensor will not cause additional absorption or reflection of light.

It is yet another object of the invention to provide a liquid crystal display panel with touch detection function, where the touch sensor has the least interference from the display function.

It is yet a further object of the invention to provide a liquid crystal display panel with touch detection function, where the touch detection function and display function share the same electrodes.

### DISCLOSURE OF THE INVENTION

A first aspect of the present invention teaches a transparent type liquid crystal display system integrates with touch detector, consisting of a liquid crystal display panel and a control system. The liquid crystal display panel consists of an upper substrate, a lower substrate, an array of upper electrodes, an array of lower electrodes, an upper polarizer, a lower polarizer, a liquid crystal layer and a back light layer; The control system consists of a micro-processor, a display control circuit, an array of display drive circuits, a touch sensor detection circuit, an array of transmission gates to short circuit the upper electrodes to the corresponding lower electrodes; The touch detection circuit is used to detect the proximity of an object or a finger to the electrodes; The display control circuit and the display drive circuits are used to perform display function; wherein the improvement is as follow: An electrode pair consisting of an upper electrode of the array of upper electrodes and a lower electrode of the array of lower electrodes is used to display a "PIXEL" or a "SEGMENT" in the liquid crystal display panel and the same electrode pair can also be used to execute a touch detection function; The display function and the touch detection function are performed by time multiplexing of two functions: The display function and the touch detection function; In operation of the display function, the upper electrodes and the lower electrodes are connected to a waveform generator of the display drive circuits by the display control circuit; In operation of the touch detection function, the upper electrodes and the lower electrodes are disconnected from the display drive circuits; the upper electrode and the lower electrode of the electrode pair are short circuit and function as a single touch sensor electrode; The capacitance between the upper and the lower electrode are short circuit and has not loading effect on the sensitivity of the touch detection function; During the operation of touch detection, the upper electrodes and the lower electrodes are disconnected from the waveform generator of the display drive circuits and the display drive circuits will not cause interference to the touch detection function; No additional fabrication process is required and no additional light absorption and light reflection is caused by adding the touch detection function in the present invention.

Another aspect of the present invention teaches a liquid crystal display system integrates with touch detector, wherein the liquid crystal display system is a reflective type and the back light layer is replaced by a reflective layer and there is no lower polarizer.

Another aspect of the present invention teaches a liquid crystal display system integrates with touch detector, wherein the liquid crystal display system is a mixed mode liquid crystal display panel, common lower electrode is used in the regions without touch detection function, and electrode pairs are used in the regions with touch detection function.

### BRIEF DESCRIPTION OF THE DRAWINGS

The foregoing and other advantages of the invention will be more fully understood with reference to the description of the best embodiment and the drawing wherein:
FIG. 1 is a cross sectional view of the construction of a conventional liquid crystal display panel.
FIG. 2 is a cross sectional view of the construction of a transparent type liquid crystal display panel with touch sensors of the present invention.
FIG. 3 is a cross sectional view of the construction of a reflective type liquid crystal display panel with touch sensors of the present invention.
FIG. 4 is a timing diagrams used to explain the operation of the display function of the present invention.
FIG. 5 is a timing diagrams used to explain the operation of the display function of the present invention.
FIG. 6 is a timing diagrams used to explain the operation of the display function of the present invention.
FIG. 7 is a circuit block diagram used to explain the operation of the liquid crystal display system with touch detector of the present invention.
FIG. 8 is a circuit block diagram of the touch detection circuit.
FIG. 9 is a cross sectional view of the construction of a mixed mode liquid crystal display panel with touch sensors of the present invention.

### DESCRIPTION OF THE PREFERRED EMBODIMENTS

The foregoing and other advantages of the present invention will be more understood with reference to the description of the preferred embodiments and the drawings as the following description.

FIG. 2 is a transparent type liquid crystal display (LCD) panel which can be used in the present invention. The liquid crystal display panel as described in FIG. 2 has two substrates: An upper substrate 21 and a lower substrate 22. Between the two substrates a liquid crystal layer 25 is inserted. An array of transparent upper display electrodes 230, 231, 232 and 233 are coated on the upper substrate 21. An array of transparent lower display electrodes 240, 241, 242 and 243 are coated on the lower substrate 22. One of the upper display electrode 230 and a corresponding lower display electrode 240 are used to display a "PIXEL" or a "SEGMENT" of the liquid crystal display panel. On the top of the upper substrate, there is an upper polarizer 26 and below the bottom of the lower substrate 22 there is a bottom polarizer 27. A back light layer 28 is below the bottom polarizer 27.

FIG. 3 is a reflective type liquid crystal display panel which can be used in the present invention. The construction of the reflective type liquid crystal display panel is similar as the construction of the transparent type liquid crystal display panel. But the reflective type liquid crystal display panel has no bottom polarizer and the back light layer is replaced by a reflective layer 38. The present invention can be applied to both reflective type and transparent type liquid crystal display panel without modification of the circuit.

One object of the present invention is to share the same electrodes as the electrodes in the display function and the electrodes in touch detection function. In order to achieve this object, the technology of time multiplexing between display function and touch detection function can be used.

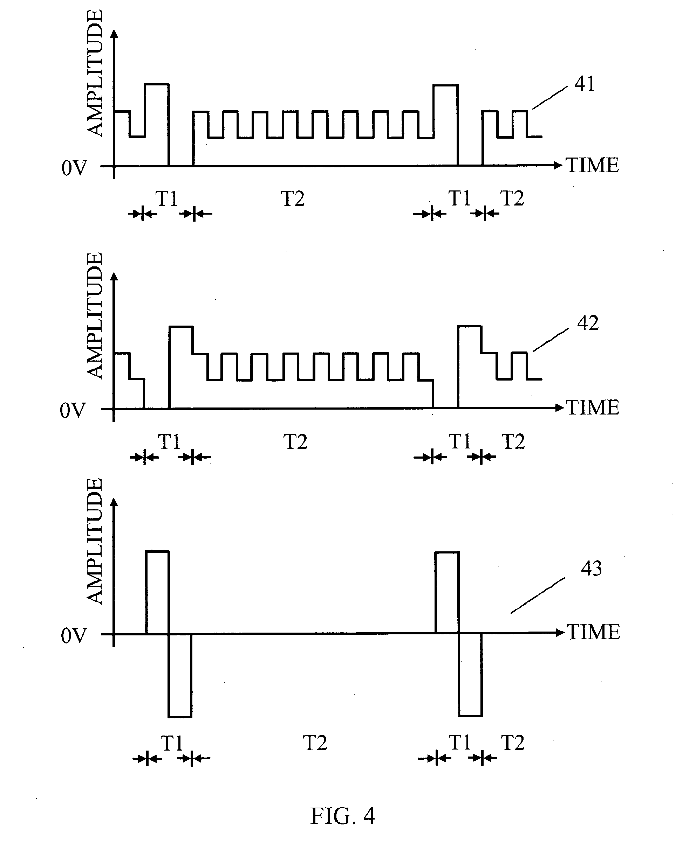

The technique of time multiplexing between display function and touch detection function can be illustrated by the waveforms in FIG. 4. The waveforms 41, 42 and 43 depicted in FIG. 4 are related to the electrodes in FIG. 2 and FIG. 3. The waveform 41 is the voltage applied to the upper electrode, the waveform 42 is the voltage applied to the lower electrode and the waveform 43 is the voltage applied between the upper electrode and lower electrode.

As illustrated in FIG 4, there are two time intervals T1 and T2. In time interval T1, the system executes display function. And in time interval T2, the system executes touch detection function.

During time interval T1, the upper electrodes and lower electrodes are connected to the LCD display drive circuits. Measurement process of touch detection can not be performed during this time interval because the disturbance of the display waveform will cause error touch detection.

During time interval T2, the system will perform the function of touch detection circuit, the upper electrodes and lower electrodes will function as touch sensors. In order to avoid the disturbance from the waveform of display circuit, the upper and lower electrodes must be disconnected from the display drive circuits. All upper electrodes and lower electrodes are connected to touch detection circuit. Besides, one upper electrode is short circuit to a corresponding lower electrode during time interval T2, and the two electrodes have the same voltage during this time as shown in the waveform 41 and 42 of FIG. 4. In FIG. 4 the waveform coupling from touch detection circuit in time interval T2 is depicted here as a square wave, it can be other kinds of waveform depending on the touch detection circuit used. In despite of the voltage waveform coupling from touch detection circuit to both electrodes in time interval T2, the voltage between the two electrodes is zero, as shown in the waveform 43 in FIG. 4. And the voltage waveform coupling from touch detection circuit will not affect the display quality of the LCD. Although there is a big capacitance between an upper electrode and the corresponding lower electrode, the electrodes are short circuit and two electrodes function as one electrode in time interval T2. The capacitance contributes zero loading to the touch detection circuit and will not affect the sensitivity of the touch detection circuit.

For a liquid crystal panel, no matter in the "ON" state or the "OFF" state, the electrical potential applied between two display electrodes must be an AC voltage without any DC component.

The waveforms displayed in FIG. 4 are the timing diagrams used to illustrate a segment or a pixel at "ON" state. The waveform 43 is the electrical potential applied between the upper and lower electrodes. It is an AC waveform without DC component.

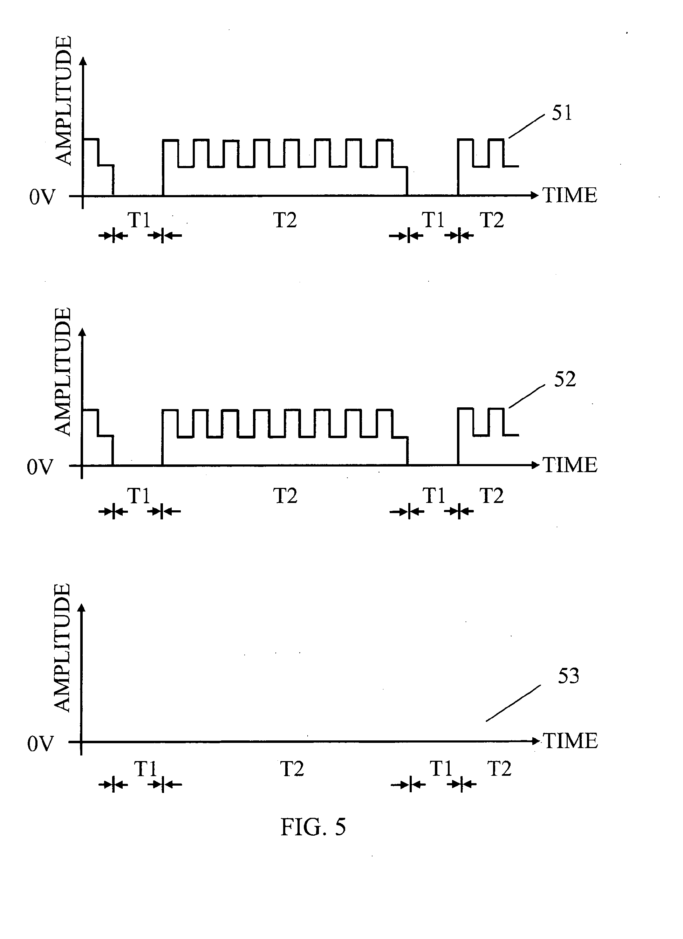

To display "OFF" state of a segment or a pixel, the relative voltage applied between two display electrodes must be kept small as to get good display contrast quality. A simple solution is to apply a zero voltage to both upper electrode and lower electrode during the display time interval T1. The waveforms are shown as in FIG. 5. In FIG. 5 waveform 51 is the electrical potential applied to the upper electrode, waveform 52 is the electrical potential applied to the lower electrode and waveform 53 is the electrical potential applied between the upper and lower electrodes. From the waveform 53 in FIG. 5, the relative voltage between upper electrode and lower electrode is zero. And display contrast ratio of "ON" and "OFF" state is very good.

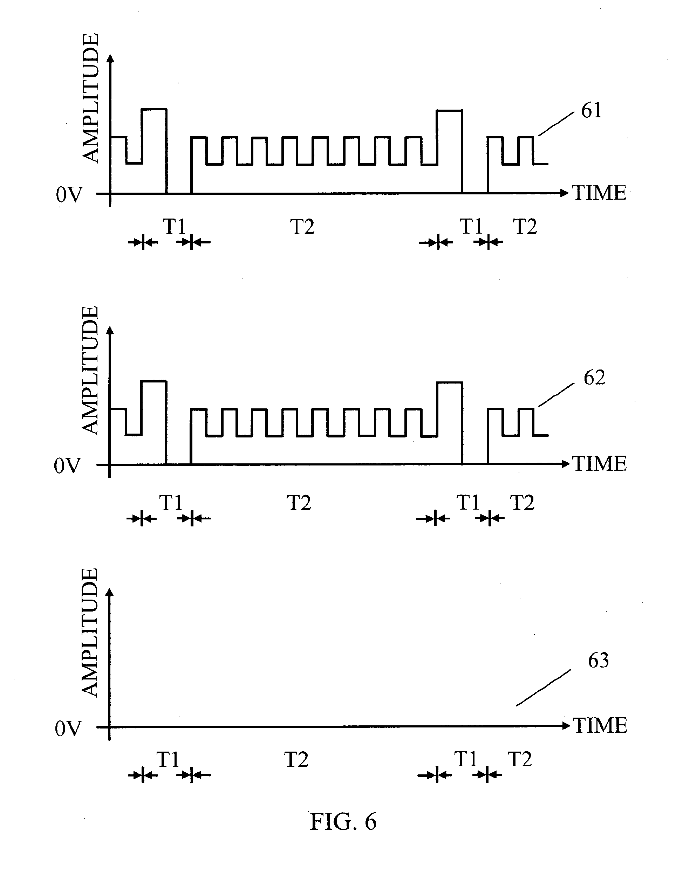

In the "OFF" state, the electric potential applied to the display electrodes is not necessary a zero voltage during display time interval T1. In FIG. 6, a non-zero voltage is applied to both upper and lower electrode in display time interval. Because both electrodes have the same waveform, the voltage between two electrodes is a zero voltage as shown in waveform 63 in FIG. 6.

In the present invention an upper electrode must be short-circuiting with a lower electrode during touch detection period, the upper electrodes can not share a common lower electrode as in a conventional LCD. This construction is described in detail by the drawings in FIG. 2 and FIG. 3.

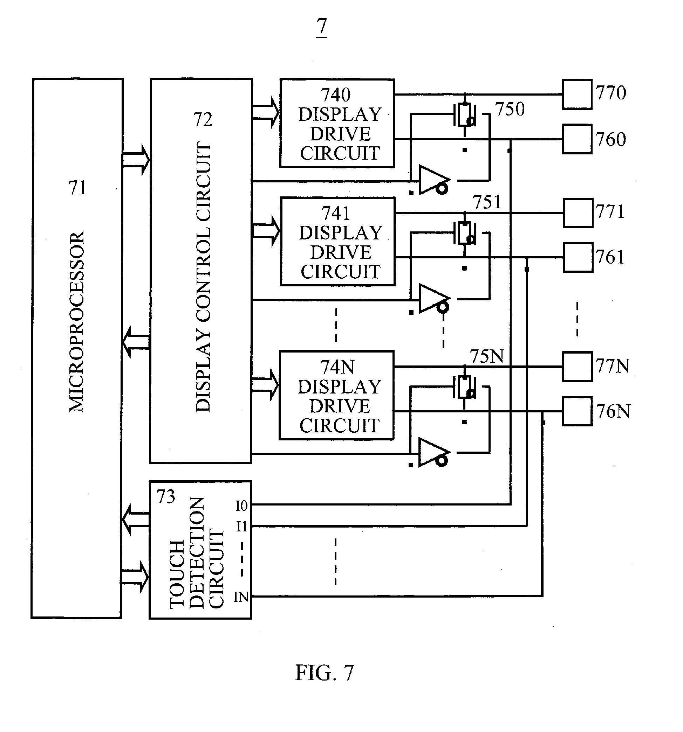

FIG. 7 is a circuit diagram used to illustrate the technology of the present invention. In FIG. 7, the liquid crystal display system with touch detector 7 contains a microprocessor 71, a display control circuit 72, a touch detection circuit 73, an array of display drive circuits 740 to 74N, an array of transmission gates 750 to 75N, an array of upper electrodes 770 to 77N and an array of lower electrode 760 to 76N. One electrode pair consisting of an upper electrode and a lower electrode can be used to implement a display function and also can be used to detect a finger or an object in proximity to the electrodes. To play two functions described above by a single electrode pair, the technology of time multiplexing is used. The microprocessor 71 generates signals to implement the time multiplexing sequence between two functions. The display control circuit 72 generates control signals to display drive circuits. The display drive circuits are used to drive the electrode pairs to execute display function. The touch detector circuit 73 is used to detect a finger or an object in proximity to an electrode pair. During the display time interval, the electrodes 760 and 770 are connected to the waveform generator in the display drive circuit 740 by the display control circuit. Transmission gate 750 is turn off and input bias circuit of touch detection circuit 73 is left floating. In this situation, the electrodes are affected only by the display drive circuit and not by the touch detection circuit.

During the touch detection time interval T2, electrodes 760 and 770 function as touch sensors and are disconnected from the waveform generator in the display drive circuit 740. At this time, transmission gate 750 is turn on and electrode 760 and 770 are short circuit. Two electrodes function as a single electrode and the capacitance between the two electrodes has no effect on the performance of touch detection function. Because the display drive circuit is disconnected from the electrodes and capacitance between two electrodes has no effect on the touch detection, the circuit 7 can work properly as a touch detector.

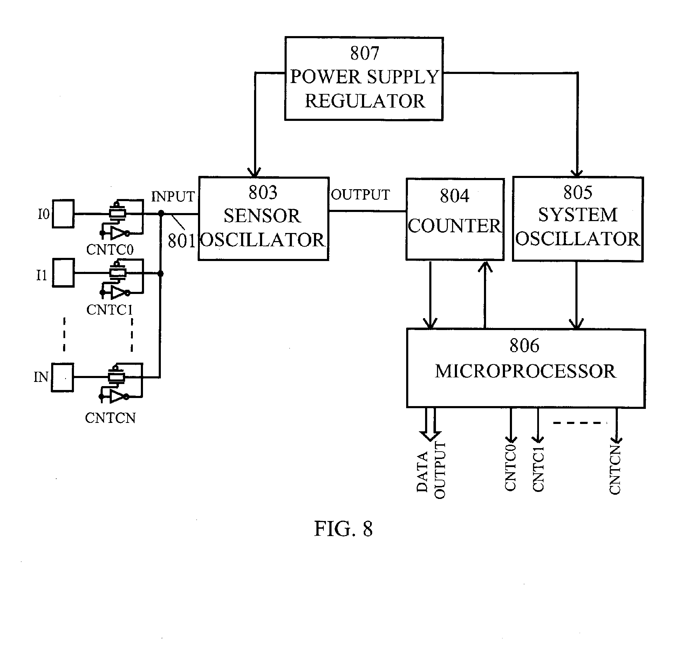

There are many kinds of capacitive object proximity detector which are published in literatures. Most of the capacitive object proximity detectors can be used as the touch detection circuit in the present invention. The technology used in U.S. Pat. 7,023,221 B1, Taiwan (R.O.C.) Pat. I 259908, EP Pat. 1791260 B1, Chinese Pat. ZL 200510080231.9 and Japanese Pat. 4365817 to Shyuh Der Lin (the inventor of the present invention) is a capacitive object proximity detector which can also be used as the touch detection circuit in the present invention. In the present invention, only one array of N sensors is necessary in the touch detection circuit and the circuit is shown in FIG. 8. The operation of the circuit is described in detail in U.S. Pat. 7,023,221 B1. In here we will explain the operation of this touch detection circuit with the operation of display function of LCD in more detail. When the circuit in FIG. 8 is used as a touch detection circuit 73 in FIG. 7, the operation of the touch detection circuit is controlled by the microprocessor 71 in FIG. 7. The microprocessor 806 in FIG. 8 can be combined together with the microprocessor 71 in FIG. 7 as one microprocessor. Otherwise the microprocessor 806 must works synchronously with the microprocessor 71 to ensure the touch detection function works synchronously with the LCD display function. As shown in FIG. 7, the electrodes 760, 761 to 76N are connected to the inputs of the touch detection circuit I0, I1 to IN respectively. During the touch detection time interval T2, the electrodes will be scanned sequentially by the transmission gates CNTC0, CNTC1 to CNTCN as showed in FIG. 8. During the LCD display time interval T1, the inputs of the touch detection circuit will be disconnected from the display electrodes by turning off the transmission gates CNTC0, CNTC1 to CNTCN in FIG. 8. And the bias circuit inside of the sensor oscillator 803 in FIG. 8 will not affect the operation of the LCD display circuit.

From the description of the technology of the present invention, the only difference between the display panel of the present invention and the conventional display panel is the construction of the lower electrodes. There is no difference in fabrication process between the technology of the present invention and the conventional technology. And there is no additional cost in the fabrication of the liquid crystal display panel in the present invention. Also there is no additional layer added in the display panel of the present invention as compare to the convention display panel. No additional layer in the display panel means there is no additional absorption and reflection of light.

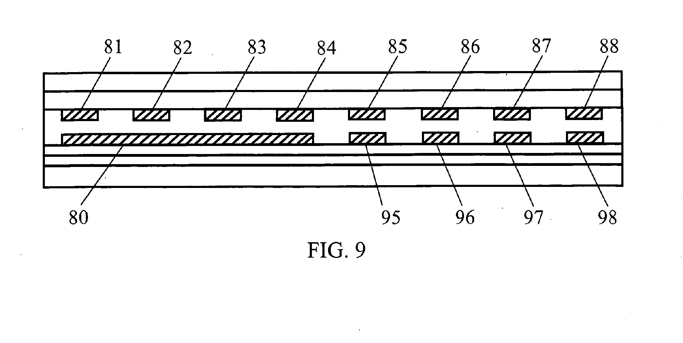

By using the same kind of fabrication process, it is feasible to combine a convention display panel and a display panel of the present invention to a mixed mode liquid crystal display panel. This mixed mode display panel can be constructed by combining the structures of FIG. 1 and FIG. 2 and is shown as in FIG. 9. In FIG. 9, the upper electrodes 85, 86, 87, 88 and lower electrodes 95, 96, 97, 98 play the dual roles of display function and touch detection. The upper electrodes 81, 82, 83, 84 and the lower common electrode 80 can only be used as display electrodes.

Although specific embodiments of the invention have been disclosed, it will be understood by those having skill in the art that minor changes can be made to the form and details of the specific embodiments disclosed herein, without departing from the scope of the invention. The embodiments presented above are for purposes of example only and are not to be taken to limit the scope of the appended claims.

## Claims

1. A transparent type liquid crystal display system integrates with touch detector, consisting of a liquid crystal display panel and a control system, said liquid crystal display panel consists of an upper substrate, a lower substrate, an array of upper electrodes, an array of lower electrodes, an upper polarizer, a lower polarizer, a liquid crystal layer and a back light layer; said control system consists of a micro-processor, a display control circuit, an array of display drive circuits, a touch detection circuit, an array of transmission gates to short circuit said upper electrodes to said corresponding lower electrodes; said touch detection circuit is used to detect the proximity of an object or a finger to said electrodes; said display control circuit and said display drive circuits are used to perform display function; wherein the improvement comprising:
an electrode pair consisting of an upper electrode of said array of upper electrodes and a lower electrode of said array of lower electrodes is used to display a pixel or a segment in said liquid crystal display panel and the same electrode pair can also be used to execute a touch detection function;
said display function and said touch detection function are performed by time multiplexing of two functions: said display function and said touch detection function;
in operation of said display function, said upper electrodes and said lower electrodes are connected to wave form generator of said display drive circuits by said display control circuit;
in operation of said touch detection function, said upper electrodes and said lower electrodes are disconnected from said display drive circuits; said upper electrode and said lower electrode of said electrode pair are short circuit and function as a single touch sensor electrode; the capacitance between said upper and lower electrode are short circuit and has not loading effect on the sensitivity of said touch detection function;
during the operation of said touch detection function, said upper electrodes and said lower electrodes are disconnected from waveform generator of said display drive circuits and said display drive circuits will not cause interference to said touch detection function; no additional fabrication process is required and no additional light absorption and light reflection is caused by adding said touch detection function in the present invention.

2. A liquid crystal display system integrates with touch detector as claimed in claim 1, wherein said liquid crystal display system is reflective type and said back light layer is replaced by a reflective layer and there is no lower polarizer.

3. A liquid crystal display system integrates with touch detector as claimed in claim 1 or 2, wherein said liquid crystal display system is a mixed mode liquid crystal display panel, common lower electrode is used in the regions without touch detection function, and electrode pairs are used in the regions with touch detection function.

## Amended claims

### Amended claims in accordance with Rule 137(2) EPC.

**1.** A transparent type liquid crystal display system integrates with a touch detector, consisting of a liquid crystal display panel and a control system,
- said liquid crystal display panel consists of an upper substrate (21), a lower substrate (22), an array of upper electrodes (230, 231, 323, 233), an array of lower electrodes (240, 241, 242, 243), an upper polarizer (26), a lower polarizer (27), a liquid crystal layer (25) and a back light layer (28);
- said control system consists of a micro-processor, a display control circuit, an array of display drive circuits, a touch detection circuit, an array of transmission gates to short-circuit said upper electrodes (230, 231, 323, 233) to said corresponding lower electrodes (240, 241, 242, 243);
- said touch detection circuit is used to detect the proximity of an object or a finger to said electrodes;
- said display control circuit and said display drive circuits are used to perform display function;
further comprising:
- an electrode pair consisting of an upper electrode (230; 231; 323; 233) of said array of upper electrodes and a lower electrode (240; 241; 242; 243) of said array of lower electrodes is used to display a pixel or a segment in said liquid crystal display panel and the same electrode pair (230, 240; 231, 241; 232, 242; 233, 243) can also be used to execute a touch detection function;
- said display function and said touch detection function are performed by time multiplexing of two functions: said display function and said touch detection function;
- in operation of said display function, said upper electrodes (230, 231, 323, 233), and said lower electrodes (240, 241, 242, 243) are connected to a wave form generator of said display drive circuits by said display control circuit;
- in operation of said touch detection function, said upper electrodes 230, 231, 323, 233) and said lower electrodes (240, 241, 242, 243) are disconnected from said display drive circuits;
- during the operation of said touch detection function, said upper electrodes (230, 231, 323, 233) and said lower electrodes (240; 241; 242; 243) are disconnected from said waveform generator of said display drive circuits and said display drive circuits will not cause interference to said touch detection function;
**characterized in that**
said upper electrode (230; 231; 323; 233) and said lower electrode (240; 241; 242; 243) of said electrode pair (230, 240; 231, 241; 232, 242; 233, 243) are short-circuit and function as a single touch sensor electrode; the capacitance between said upper and lower electrodes are short-circuit and has no loading effect on the sensitivity of said touch detection function.

**2.** A liquid crystal display system integrates with a touch detector as claimed in claim 1, wherein said liquid crystal display system is reflective type and said back light layer (28) is replaced by a reflective layer (38) and there is no lower polarizer (27).

**3.** A liquid crystal display system integrates with a touch detector as claimed in claim 1 or 2, wherein said liquid crystal display system is a mixed mode liquid crystal display panel, wherein a common lower electrode is used in the regions without touch detection function, and electrode pairs (230, 240; 231, 241; 232, 242; 233, 243) are used in the regions with touch detection function.
